# FASCICULE DE BREVET EUROPEEN

(11) **EP 1 806 289 B1**
(45) Date de publication et mention de la délivrance du brevet: **25.06.2008**
(21) Numéro de dépôt: 07356002.1
(22) Date de dépôt: 09.01.2007
(51) Int. Cl.: B65B 27/10, B65D 71/50, B27D 1/08

(54) **Dispositif de transport et procédé de conditionnement de segments de bois**
Transportvorrichtung für Holzsegmente und Verfahren zum Verpacken derselben
Transport device and packaging method for wood segments

(30) Priorité: 10.01.2006 FR 0600192
(43) Date de publication de la demande: 11.07.2007
(73) Titulaire: ARCI RHONE ALPES ATELIERS DE REPARATIONS ET DE CONSTRUCTIONS INDUSTRIELLES, 38300 Bourgoin Jallieu (FR)
(72) Inventeur: Levis, Christian Lucien Alphonse, 38300 Maubec (FR)
(74) Mandataire: Myon, Gérard Jean-Pierre

(56) Documents cités:
- EP-A- 0 978 452
- FR-A- 979 696
- FR-A- 2 532 627
- US-A- 4 057 262
- US-A- 4 699 416

## Description

L'invention a trait à un dispositif de transport de segments de bois. L'invention a également trait à un procédé de conditionnement de segments de bois.

Au sens de la présente demande, un segment de bois peut être une bûche ou un rondin de bois et, plus généralement, tout morceau de bois de longueur donnée. De tels segments de bois peuvent être utilisés comme bois de chauffage, c'est-à-dire être brûlés dans une cheminée.

Pour le transport de segments de bois, il est connu de EP-A-0 978 452 d'utiliser un appareil dit de fardelage pour constituer des fagots d'un mètre cube environ et faire rouler cet appareil sur lui-même afin de déplacer les segments de bois ainsi rassemblés. Cet appareil est réalisé en profilés métalliques cintrés, ce qui lui confère une rigidité satisfaisante.

Toutefois, le prix de revient d'un tel matériel est relativement élevé. En outre, lorsqu'un marchand de bois livre du bois avec ce type de matériel, il doit récupérer celui-ci en vue d'une utilisation ultérieure, ce qui impose de ranger immédiatement le bois ou de le stocker en tas grossier, sauf à ce que le marchand de bois accepte de revenir chercher cet appareil lorsque le client l'aura vidé en rangeant son bois. De telles contraintes dissuadent en pratique les marchands de bois d'utiliser ce genre de matériel.

Il est également connu de FR-A-2 532 627 d'utiliser un cadre formé de lames de bois fixées sur des coins rigides au moyen de clous ou d'agrafes. Le cadre ne peut avoir qu'une forme parallélépipédique et ne peut être que difficilement désassemblé. En outre, les clous ou agrafes ne sont pas biodégradables et peuvent s'avérer dangereux pour un utilisateur.

C'est à ces inconvénients qu'entend plus particulièrement remédier l'invention en proposant un nouveau dispositif de transport de segments de bois économique, aisé à manipuler et pouvant être laissé à demeure chez l'utilisateur des segments de bois transportés pour y être brûlé dans sa cheminée.

A cet effet, l'invention concerne un dispositif de transport de segments de bois comprenant une frette annulaire réalisée dans un matériau biodégradable et combustible, caractérisé en ce que la frette comprend deux anneaux de frettage reliés par des entretoises immobilisées sur ces anneaux par coopération de formes.

Grâce à l'invention, une fois le bois livré, l'utilisateur peut prendre le temps qu'il souhaite pour vider, en une fois ou progressivement, le dispositif de transport, soit en constituant une pile de segments de bois, soit en brûlant progressivement ces segments dans sa cheminée. Lorsque le dispositif a été vidé, la frette peut être également brûlée dans la cheminée de l'utilisateur, sans qu'il soit nécessaire que le marchand de bois vienne récupérer cette frette. Comme l'assemblage entre les anneaux et les entretoises ne comprend ni clou ni vis, la frette est complètement combustible.

On peut prévoir qu'au moins un des éléments que sont l'un des anneaux et l'une des entretoises est pourvu d'une entaille de réception partielle de l'autre élément. Ce mode d'assemblage est particulièrement efficace.

En outre, au moins un coin peut être prévu pour être introduit entre une entretoise et des segments de bois adjacents disposés dans la frette, ce coin venant en appui respectivement contre cette entretoise et contre ces segments. Ce coin peut être pourvu de reliefs d'immobilisation par rapport à l'entretoise, ces reliefs venant sélectivement en prise avec une partie correspondante de l'entretoise, en fonction du degré d'introduction du coin entre cette entretoise et les segments de bois.

Le dispositif peut, en outre, comprendre une clef de maintien de l'entretoise lors de l'introduction du coin entre cette entretoise et des segments de bois adjacents disposés dans la frette, une partie de cette clef étant apte à coiffer l'entretoise en ménageant une zone de passage du coin lors de son introduction entre une entretoise et les bûches adjacentes, cette partie étant solidaire d'une poignée de maintien. Une telle clef permet d'éviter que l'effort de frottement généré lors de l'introduction du coin entre l'entretoise et les segments de bois adjacents ne conduise à une rupture de l'entretoise.

La frette peut comprendre deux anneaux de frettage pourvus chacun de plusieurs zones de rupture préférentielles. Ainsi, lorsqu'il convient de brûler les parties constitutives de la frette, ces anneaux peuvent être aisément divisés en des morceaux dont la taille est compatible avec leur mise en place dans le foyer d'une cheminée classique.

Les anneaux de frettage, les entretoises et/ou le coin sont avantageusement moulés dans un mélange de copeaux ou de sciure de bois et d'un liant, ce qui implique que ces matériels peuvent être facilement brûlés dans une cheminée domestique, sans risque de pollution environnementale.

Les anneaux de frettage sont avantageusement pourvus, sur leurs bords internes respectifs, de reliefs de coincement des segments de bois adjacents. Ceci permet de retenir efficacement les segments de bois à l'intérieur de la frette.

Selon un mode de réalisation avantageux, la frette définit une surface de roulement qui permet de la faire rouler sur le sol, alors que cette surface de roulement est pourvue d'au moins une zone sensiblement plane qui permet un appui stable du dispositif sur une surface plane. Ainsi, le dispositif peut être arrêté en position lors de son roulage sur le sol.

Selon un autre mode de réalisation, l'une au moins des entretoises forme une poignée de portage de la frette chargée ou non en segments de bois.

L'invention concerne également un procédé de conditionnement de segments de bois pouvant être mis en oeuvre grâce à un dispositif tel que précédemment décrit. Selon ce procédé, on dispose des segments de bois dans la frette et, après remplissage de la frette avec des segments de bois, on introduit, entre au moins une entretoise reliant deux anneaux de frettage appartenant à cette frette et les segments de bois adjacents, un coin de verrouillage des segments en position dans la frette.

De façon avantageuse, une étape supplémentaire est prévue qui consiste à tasser le bois présent dans la frette, en la faisant rouler ou en la secouant, avant mise en place du ou de chaque coin.

L'invention sera mieux comprise et d'autres avantages de celles-ci apparaîtront plus clairement à la lumière de la description qui va suivre de deux modes de réalisation d'un dispositif de transport de segments de bois conforme à son principe et d'un procédé de mise en oeuvre, donnée uniquement à titre d'exemple et faite en se référant aux dessins annexés dans lesquels :
- la figure 1 est une vue en perspective avec arrachement partiel d'un dispositif de transport conforme à l'invention une fois celui-ci chargé avec des bûches de bois ;
- la figure 1A est une vue en perspective analogue à la figure 1, le dispositif étant représenté vide, vu sous un autre angle et incorporant une variante du bord externe des anneaux de frettage ;
- la figure 2 est une vue de face de la moitié d'un anneau de frettage appartenant au dispositif de la figure 1 ;
- la figure 3 est une vue de face à plus grande échelle d'une entretoise appartenant au dispositif de la figure 1 ;
- la figure 4 est une vue de face à l'échelle de la figure 3 d'un coin appartenant au dispositif de la figure 1 ;
- la figure 5 est une vue à plus petite échelle représentant une étape d'un procédé de conditionnement de segments de bois mis en oeuvre grâce au dispositif des figures 1 à 4 ;
- la figure 6 est une vue à plus grande échelle d'une clef de maintien utilisée dans l'étape de procédé représentée à la figure 5 ;
- la figure 7 est une vue en perspective, à plus grande échelle que la figure 1, d'un dispositif de transport selon un second mode de réalisation de l'invention ; et
- la figure 8 est une vue analogue à la figure 4, à la même échelle, illustrant un coin du dispositif de la figure 7 ;

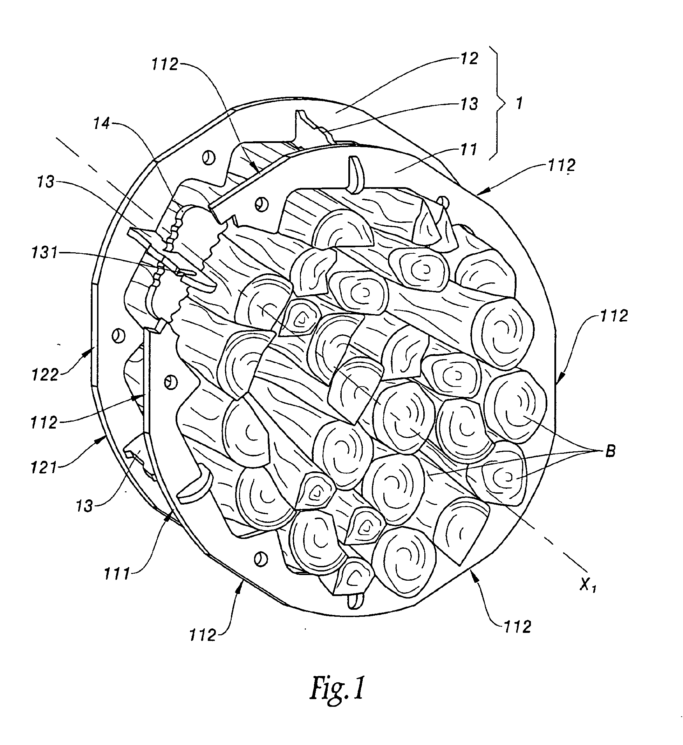

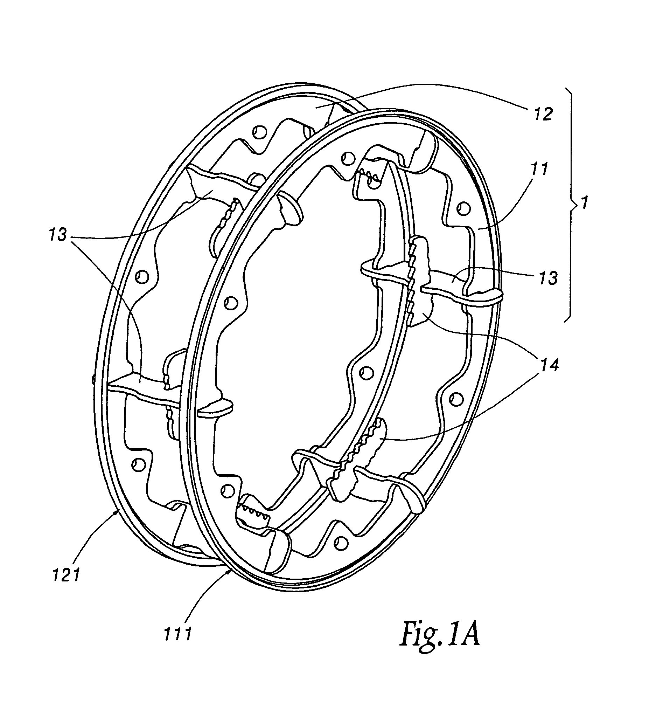

Le dispositif de transport de segments de bois représenté à la figure 1 comprend une frette 1 qui est formée par l'assemblage de deux anneaux de frettage 11 et 12 reliés par des entretoises 13. La frette 1 définit un volume globalement cylindrique de réception de bûches de bois B destinées à être brûlées dans une cheminée. Les bûches pourraient être remplacées par des rondins ou tout autre segment de bois de longueur prédéterminée.

Cette frette est prévue pour être déplacée, une fois chargée en bûches B, en roulant sur le sol. Pour ce faire, les bords externes 111 et 121 des anneaux 11 et 12 sont globalement circulaires et forment chacun une piste de roulement sur le sol. Ces bords sont chacun pourvus de six parties globalement planes 112, respectivement 122 qui permettent de faire reposer la frette 1 sur un sol plan sans risque de la voir basculer autour de son axe central X₁. Les parties 112 et 122 facilitent donc le stockage de bûches B dans la frette 1.

Les entretoises 13 sont montées sur les anneaux 11 et 12 par coopération de formes.

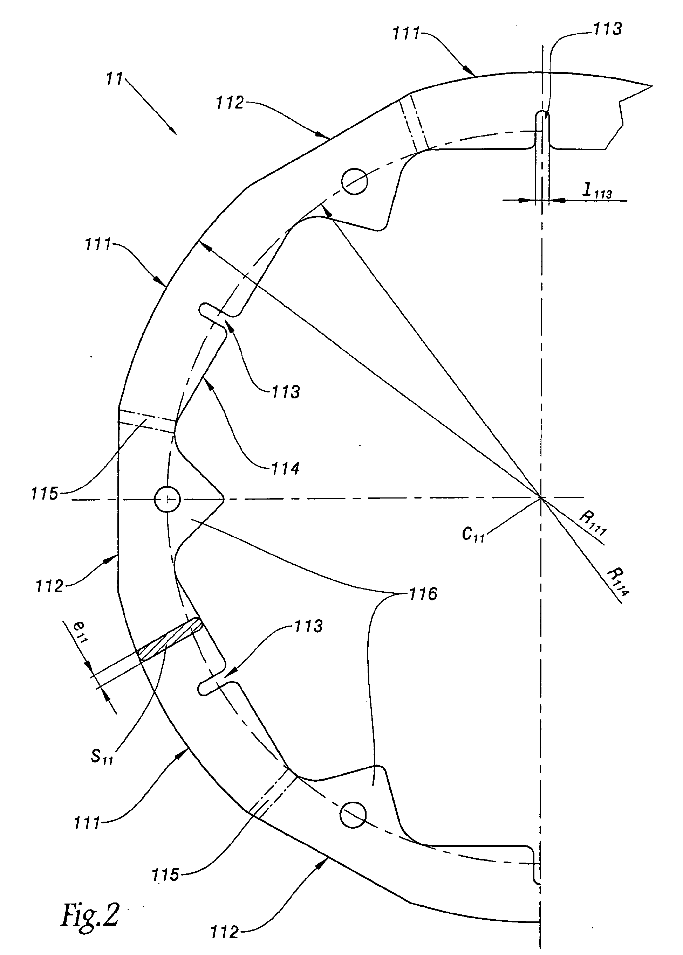

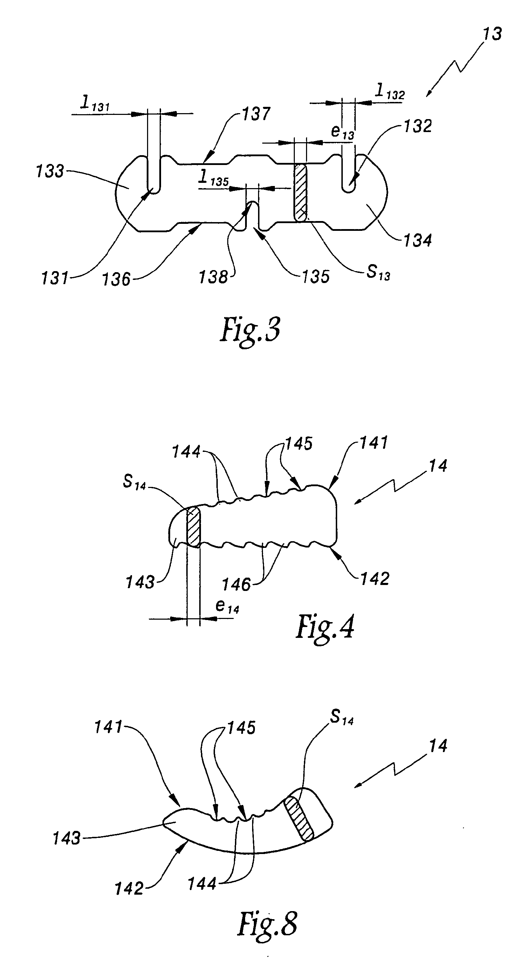

Les anneaux 11 et 12 étant identiques, seul l'anneau 11 est décrit en détail dans ce qui suit, cet anneau étant plus particulièrement visible à la figure 2, alors qu'une des entretoises 13 est plus particulièrement visible à la figure 3.

L'anneau 11 comprend six entailles 113 régulièrement réparties autour de son centre C₁₁ et s'étendant à partir de son bord interne 114.

La largeur l₁₁₃ d'une entaille 113 est légèrement supérieure à l'épaisseur e₁₃ d'une entretoise 13, cette épaisseur étant représentée à la figure 3 par une section S₁₃ de cette entretoise. Chaque entaille 113 s'étend sur environ la moitié de la largeur de l'anneau 11, c'est-à-dire de la distance entre ses bords 111 et 114 au niveau de cette entaille 113.

L'entretoise 13 est, quant à elle, pourvue de deux entailles 131 et 132 ménagées au voisinage de ses extrémités, la largeur l₁₃₁ de l'entaille 131 ayant une valeur légèrement supérieure à l'épaisseur e₁₁ de l'anneau 11 qui est visible à la figure 2 sur une section S₁₁ de cet anneau. De la même façon, l'entaille 132 a une largeur l₁₃₂ légèrement supérieure à l'épaisseur de l'anneau 12. Les entailles 131 et 132 s'étendent sur sensiblement la moitié de la largeur l₁₃ de l'entretoise 13.

Il est ainsi possible d'insérer partiellement les anneaux 11 et 12 dans les entailles 131 et 132 de chacune des six entretoises 13, les portions d'extrémités 133 et 134 de ces entretoises, dans lesquelles sont respectivement ménagées les entailles 131 et 132, étant quant à elles partiellement engagées dans les entailles 113 de l'anneau 11 et dans les entailles correspondantes de l'anneau 12. Compte tenu des largeurs des entailles et des épaisseurs des éléments 11, 12 et 13, on obtient un assemblage par coopération de formes de ces éléments, sans qu'il soit nécessaire d'utiliser des clous ou des éléments de visserie métalliques.

Ainsi, la frette 1 peut être constituée sans outillage particulier dans tout lieu où il est prévu de conditionner des segments de bois.

Les éléments 11, 12 et 13 sont réalisés dans un matériau biodégradable et combustible. Ainsi, lorsque la frette 1 a été utilisée pour stocker et transporter du bois et lorsque ce bois a été extrait de la frette, il est possible de brûler les éléments 11, 12 et 13 dans une cheminée, sans nuire à l'environnement ou dégager des odeurs désagréables.

Les éléments 11, 12 et 13 sont réalisés par moulage d'un mélange de sciure de bois frais, c'est-à-dire de bois qui n'est pas recyclé, et d'un liant. Comme la sciure de bois est obtenue à partir de bois frais, on évite les risques de pollution liés au fait qu'un bois recyclé peut provenir de déchets de palettes traitées chimiquement, de bois souillés par des détergents ou par des produits pétroliers. Avantageusement, la sciure de bois est obtenue à partir de résineux, par exemple d'épicéa ou de pin.

Le liant est formé par un mélange de colle et d'eau, la colle pouvant, par exemple, être à base de polymère de diphénylméthane 4,4' di-isocyanate. Le mélange utilisé pour mouler les éléments 11, 12 et 13 est, par exemple, composé d'environ 95 % de sciure de bois et de 5 % de liant. Après polymérisation de la colle lors de l'opération de moulage, au cours de laquelle le mélange est chauffé, le pourcentage de colle dans les éléments 11, 12 et 13 est de l'ordre de 3 à 4 %.

Les éléments 11, 12 et 13 peuvent ainsi être brûlés sans crainte dans une cheminée, au même titre qu'une bûche. Ces éléments peuvent également, le cas échéant, être mis en décharge comme un bois massif. Ils sont en effet biodégradables, ils peuvent même être mis en compost, comme un bois densifié, étant entendu qu'il est alors préférable de les humidifier régulièrement pour favoriser leur décomposition.

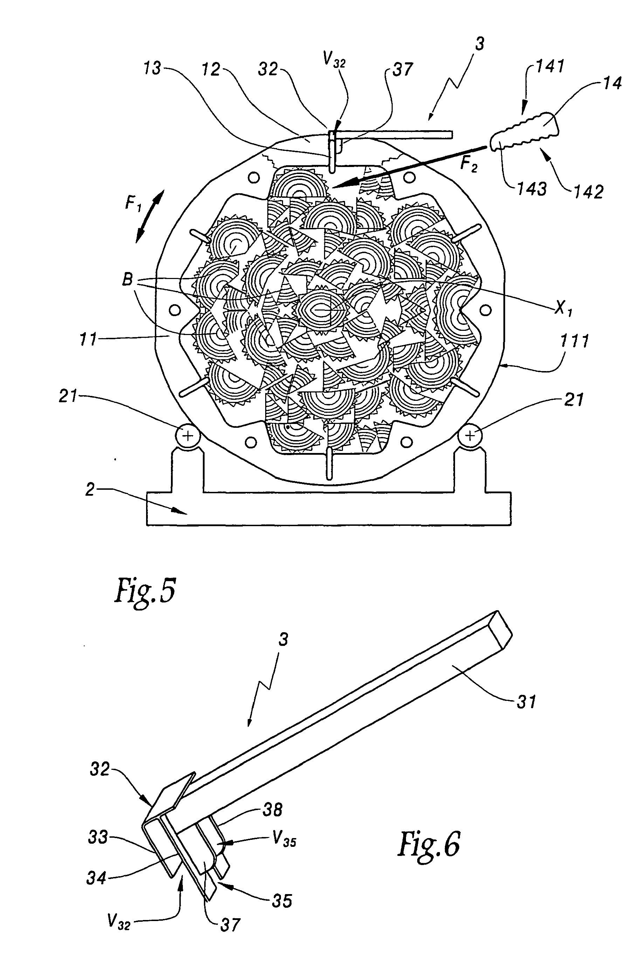

Une fois la frette constituée par l'assemblage des deux anneaux 11 et 12 et des six entretoises 13, comme expliqué ci-dessus, celle-ci est chargée, c'est-à-dire sensiblement remplie, avec des bûches B. De façon avantageuse, comme représenté à la figure 6, la frette 1 est alors posée sur un support 2 pourvu de deux galets 21 sur lesquels la frette 1 repose en pouvant tourner autour de son axe X₁, comme représenté par la double flèche F₁ à la figure 5.

Chaque entretoise 13 est pourvue d'une entaille 135 ménagée dans sa partie centrale, sur son bord 136 opposé au bord 137 à partir duquel sont ménagées les entailles 131 et 132. Ainsi, lorsque une entretoise 13 est en place entre les anneaux 11 et 12, son entaille 135 est tournée vers le volume intérieur de la frette 1, c'est-à-dire vers les bûches B adjacentes.

Pour assurer l'immobilisation des bûches B dans la frette 1, six coins 14 sont prévus pour être introduits chacun entre l'une des entretoises 13 et les bûches B adjacentes, comme représenté par la flèche F₂ à la figure 6.

L'un des coins 14 est plus particulièrement visible à la figure 4, sa section transversale étant visible sur cette figure avec la référence S₁₄. On note e₁₄ l'épaisseur du coin 14 qui est légèrement inférieure à la largeur l₁₃₅ de l'entaille 135. Ainsi, le coin 14 peut être engagé et retenu en position dans l'entaille 135. Les bords supérieur et inférieur 141 et 142 du coin 14 dans la configuration de la figure 4 s'éloignent l'un de l'autre à partir de son extrémité avant 143 représentée sur la gauche de cette figure. Ainsi, si un coin 14 est introduit entre une entretoise 13 et les bûches B adjacentes avec son extrémité 143 tournée vers l'avant, l'effort centripète exercé par ce coin sur les bûches B est d'autant plus important que le coin est plus profondément enfoncé entre l'entretoise 13 et les bûches B adjacentes.

Le bord 141 de chaque coin 14 est pourvu d'une série de bosses 144 et de creux 145 qui se succèdent, ces reliefs venant en appui contre le fond 138 de l'entaille 135 de l'entretoise 13 correspondante, au fur et à mesure que le coin 114 est introduit dans l'entaille 135. Ainsi, les reliefs 144 et 145 forment des moyens de retenue en position de chaque coin 14 par rapport à l'entretoise 13 contre laquelle il est monté.

Le bord 142 de chaque coin 14 est, quant à lui, pourvu de dents 146 d'accrochage sur la ou les bûches B adjacentes.

Les coins 14 sont réalisés dans le même matériau que les éléments 11, 12 et 13, de sorte qu'on peut en disposer de la même manière.

Afin d'éviter que l'effort de frottement exercé par le bord 141 d'un coin 14 sur le fond 138 de l'entaille 135 d'une entretoise 13 ne conduise à une rupture de cette entretoise, une clef 3 fait également partie du dispositif de l'invention. Cette clef est métallique et comprend une poignée 31 destinée à être prise en main par un utilisateur, ainsi qu'une partie 32 destinée à venir coiffer la partie médiane du bord externe 137 d'une entretoise 13 pour résister à l'effort de frottement dû à la mise en place du coin 14. La partie 32 est globalement en forme de U et son volume interne V₃₂ a une largeur légèrement supérieure à l'épaisseur e₁₃. La partie 32 est définie entre deux tôles 33 et 34, la tôle 34 étant pourvue d'une entaille 35 en communication avec un autre volume V₃₅, lui-même défini entre deux tôles de renfort 37 et 38 soudées sur la face de la tôle 34 opposée à la tôle 33, perpendiculairement à cette tôle. Le volume V₃₅ et l'entaille 35 forment une zone de passage du coin 14 lors de son introduction entre une entretoise 13 et les bûches B adjacentes. Ainsi, la partie 32 maintient efficacement l'entretoise 13, sans que la clef 3 gêne la mise en place du coin 14 correspondant.

Le bord interne 114 de l'anneau 11 est pourvu de six dents 116 destinées à améliorer le blocage des bûches B à l'intérieur de la frette 1. En variante, un nombre différent de dents peut être prévu, leur forme pouvant être irrégulière, ce qui améliore encore l'effet de blocage obtenu.

Le fonctionnement du dispositif de l'invention est le suivant : Lorsque la frette 1 a été sensiblement remplie avec des bûches B, on la fait tourner autour de son axe X₁, sur les galets 21 et comme représenté par la double flèche F₁ à la figure 5, pour tasser les bûches. Si nécessaire, des bûches supplémentaires peuvent alors être ajoutées.

Une fois le volume interne de la frette 1 rempli avec des bûches, on coiffe l'une des entretoises 13 se trouvant en partie supérieure de la frette 1 avec la partie 32 de la clef 3 et on met en place un coin 14 comme expliqué ci-dessus et représenté par la flèche F₂ à la figure 5.

On fait alors tourner la frette 1 de 60° environ pour amener l'une des entretoises voisines en position supérieure. On met ensuite en place un nouveau coin 14 au voisinage de cette seconde entretoise, en s'aidant de la clef 3.

On poursuit cette opération jusqu'à ce qu'un coin soit introduit dans l'entaille centrale 135 de chacune des entretoises 13.

En variante, on peut ne pas mettre un coin entre chaque entretoise 13 et les bûches adjacentes, notamment si les bûches sont déjà fermement immobilisées après mise en place de deux ou trois coins.

Ce mode d'immobilisation des bûches B à l'intérieur du volume de la frette 1 permet de se dispenser de l'utilisation d'une sangle ou d'une bande de cerclage métallique.

Pour faciliter le traitement des anneaux 11 et 12 une fois ceux-ci vidés du bois qu'ils contiennent, chacun de ces anneaux est pourvu de zones de rupture préférentielles formées par des parties de moindre épaisseur, visibles à la figure 2 avec la référence 115 et régulièrement réparties autour du centre, C₁₁ ou équivalent, de l'anneau. Dans l'exemple, six parties 115 sont prévues, ce qui permet de constituer des tronçons ou morceaux d'anneaux 11 ou 12 correspondant chacun à un secteur angulaire d'environ 60° et de longueur permettant leur mise en place dans un foyer normal de cheminée. Un nombre différent de parties 115 peut être prévu.

Le rayon R₁₁₁ du bord 111 dans ses parties circulaires est égal à 500 mm environ. Le rayon intérieur maximal R₁₁₄ du bord 114 est égal à environ 438 mm. Avec la géométrie représentée à la figure 2, la surface interne à l'anneau 11 est de l'ordre de 0,533 m² ce qui est tout à fait avantageux.

L'invention a été représentée avec une frette 1 dont les anneaux 11 et 12 comprennent six parties planes 112 et 122, alors que six entretoises 13 et six coins 14 sont prévus. Le nombre de ces parties planes, de ces entretoises et de ces coins est en fait variable. Il est de préférence supérieur à trois. Le nombre de parties planes n'est pas nécessairement égal au nombre d'entretoises.

Comme représenté uniquement à la figure 1A, les bords externes 111 et 121 des anneaux 11 et 12 peuvent être dépourvus de parties planes c'est-à-dire circulaires, auquel cas le roulage de la frette sur le sol est facilité.

Même si les valeurs des rayons des anneaux indiquées ci-dessus sont tout à fait avantageuses, elles ne sont pas limitatives. En pratique, la capacité de la frette 1 peut varier entre environ 30 litres pour un modèle grand public et environ demi stère, voire un stère, pour un modèle dit professionnel.

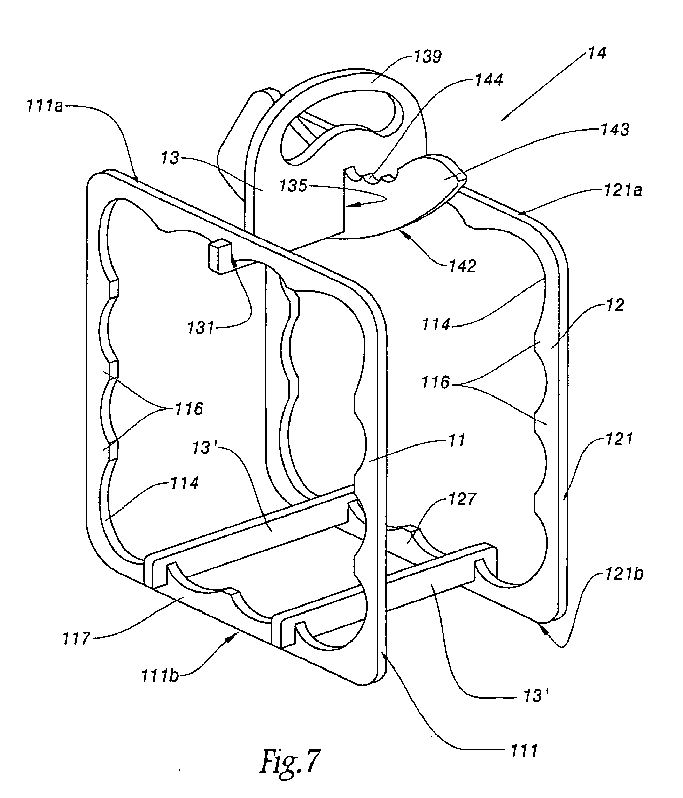

Dans le second mode de réalisation représenté aux figures 7 et 8, les éléments analogues à ceux du premier mode de réalisation portent des références identiques à celles du premier mode de réalisation. Le dispositif de transport de bois de ce mode de réalisation est destiné au transport de bûchettes ou de rondins en quantité relativement faible, de l'ordre de 40 litres, voire 25 litres. Il comprend deux anneaux de frettage 11 et 12 reliés par une entretoise supérieure 13 et deux entretoises inférieures 13' assemblées par coopération de formes. Les bords internes 114 des anneaux 11 et 12 sont pourvus de dents 116 facilitant la retenue des bûches dans le volume cylindrique à section globalement carrée défini par les anneaux 11 et 12. Les bords extérieurs 111 et 112 des anneaux 11 et 12 sont à section globalement carrée, avec des angles arrondis, de sorte que la frette constituée des éléments 11, 12, 13 et 13' n'est pas sensée rouler sur le sol.

L'entretoise 13 forme une poignée 139 obtenue par découpage de l'entretoise 13, ce qui permet de porter le dispositif de transport de bois, à vide ou lorsqu'il est chargé en segments de bois.

Comme dans le premier mode de réalisation, les entretoises 13 et 13' sont pourvues d'entailles, dont une est visible à la figure 7 avec la référence 131, permettant leur montage sur les anneaux 11 et 12. Les anneaux 11 et 12 sont pourvus d'entailles non visibles à la figure 7 mais analogues aux entailles 113 du premier mode de réalisation. Les anneaux 11 et 12 pourraient toutefois être dépourvus d'entailles du type des entailles 113 du premier mode de réalisation, en particulier dans leur partie inférieur destinée à coopérer avec les entretoises 13'.

L'entretoise 13 est pourvue d'une entaille 135 de réception d'un coin 14 plus particulièrement visible à la figure 8. Ce coin 14 est globalement en forme de croissant avec ses bords 141 et 142 qui s'écartent l'un de l'autre en s'éloignant de son extrémité avant 143. Le bord 141 est pourvu d'une succession de bosses 144 et de creux 145 qui lui permettent de coopérer avec le fond de l'entaille 135. Le bord 142 est dépourvu de dent. Son caractère arqué permet d'augmenter la progressivité de l'effort de blocage obtenu grâce au coin 14.

En variante, le coin 14 représenté à la figure 8 peut être remplacé par un coin à bords rectilignes, du type de celui représenté à la figure 4, ses bords pouvant être dépourvus de bosse et de dents, c'est-à-dire globalement lisses.

Selon une variante non représentée de l'invention, le dispositif du second mode de réalisation peut également comprendre des anneaux de frettage dont les bords externes sont globalement circulaires, de sorte qu'il peut rouler sur le sol. Ainsi, l'utilisateur peut, au choix, porter ce dispositif ou le faire rouler.

Les éléments 11, 12, 13, 13' et 14 peuvent être réalisés dans le même matériau que ceux du premier mode de réalisation ou dans un autre matériau biodégradable et combustible.

Lorsque la frette formée des éléments 11, 12, 13 et 13' de ce mode de réalisation a été sensiblement remplie avec des bûches de bois, il est possible de la secouer, pour tasser les bûches, avant de compléter son remplissage et de mettre en place le coin 14.

Les parties supérieures et rectilignes 111a et 121a des bords 111 et 121 sont bombées et convexes, alors que leurs parties inférieures et rectilignes 111b et 121b sont bombées et concaves. Ainsi, deux frettes 1 peuvent être gerbées, les parties 111a et 121a de la frette inférieure s'engageant au moins partiellement dans les parties 111b et 121b de la frette supérieure.

Selon une variante non représentée de l'invention et afin de faciliter le gerbage, les barreaux inférieurs 117 et 127 des anneaux 11 et 12 sont pourvus d'une partie centrale coudée vers le haut, de sorte que le volume interne de la frette n'interfère pas avec l'encombrement de la poignée 139 d'une frette située en dessous.

Quel que soit le mode de réalisation considéré, les dents 116 sont facultatives. En d'autres termes, les bords 114 peuvent être lisses.

Les caractéristiques techniques des modes de réalisation décrits peuvent être combinées dans le cadre de l'invention telle que définie dans le jeu de revendications ci-joint.

## Revendications

1. Dispositif de transport de segments de bois (B), comprenant une frette annulaire (1) réalisée dans un matériau biodégradable et combustible, **caractérisé en ce que** ladite frette comprend deux anneaux de frettage (11, 12) reliés par des entretoises (13, 13') immobilisées sur lesdits anneaux par coopération de formes (e₁₁, e₁₃, l₁₁₃, l₁₃₁, l₁₃₂).

2. Dispositif selon la revendication 1, **caractérisé en ce qu'**au moins un des éléments que sont un des anneaux (11, 12) et une des entretoises (13, 13') est pourvu d'une entaille (113, 131, 132) de réception partielle de l'autre élément.

3. Dispositif selon l'une des revendications 1 ou 2, **caractérisé en ce qu'**il comprend en outre au moins un coin (14) apte à être introduit (F₂) entre une entretoise (13) et des segments de bois adjacents (B) disposés dans la frette (1), ledit coin venant en appui respectivement contre ladite entretoise et contre lesdits segments de bois adjacents.

4. Dispositif selon la revendication 3, **caractérisé en ce que** ledit coin (14) est pourvu de reliefs (144, 145) d'immobilisation par rapport à ladite entretoise (13), lesdits reliefs venant sélectivement en prise avec une partie correspondante (138) de ladite entretoise, en fonction du degré d'introduction (F₂) dudit coin entre ladite entretoise et lesdits segments de bois (B).

5. Dispositif selon l'une des revendications 2 ou 3, **caractérisé en ce qu'**il comprend en outre une clef (3) de maintien de ladite entretoise (13) lors de l'introduction (F₂) dudit coin (14) entre ladite entretoise et des segments de bois (B) adjacents disposés dans la frette (1), une partie (32) de ladite clef étant apte à coiffer ladite entretoise en ménageant une zone (35, V₃₅) de passage du coin lors de son introduction (F₂), ladite partie étant solidaire d'une poignée de maintien (31).

6. Dispositif selon l'une des revendications précédentes, **caractérisé en ce que** ladite frette (1) comprend deux anneaux de frettage (11, 12) pourvu chacun de plusieurs zones (115) de rupture préférentielle.

7. Dispositif selon l'une des revendications 1 à 6, **caractérisé en ce que** lesdits anneaux de frettage (11, 12), lesdites entretoises (13, 13') et/ou lesdits coins (14) sont moulés dans un mélange de copeaux ou de sciure de bois et d'un liant.

8. Dispositif selon l'une des revendications 1 à 7, **caractérisé en ce que** lesdits anneaux de frettage (11, 12) sont pourvus, sur leurs bords internes respectifs (114), de reliefs (116) de coincement des segments de bois adjacents (B).

9. Dispositif selon l'une des revendications précédentes, **caractérisé en ce que** ladite frette (1) définit une surface de roulement (111, 112) permettant de faire rouler ladite frette sur le sol et **en ce que** ladite surface de roulement est pourvue d'au moins une zone (112, 122) sensiblement plane apte à permettre un appui stable dudit dispositif sur une surface plane.

10. Dispositif selon l'une des revendications 1 à 9, **caractérisé en ce que** l'une (13) au moins desdites entretoises (13, 13') forme une poignée (139) de portage de ladite frette (1) chargée ou non en segments de bois (B).

11. Procédé de conditionnement de segments de bois dans lequel on dispose lesdits segments (B) dans une frette (1) d'un dispositif selon l'une des revendications précédentes, dans lequel après remplissage de ladite frette avec lesdits segments de bois, il comprend une étape consistant à introduire (F₂), entre au moins une entretoise (13) reliant deux anneaux de frettage (11, 12) appartenant à ladite frette et des segments de bois adjacents (B), un coin (14) de verrouillage desdits segments en position dans ladite frette.

12. Procédé selon la revendication 11, **caractérisé en ce qu'**il comprend une étape consistant à tasser le bois (B) dans ladite frette, en la faisant rouler (F₁) ou en la secouant, avant mise en place (F₂) du ou de chaque coin (14).

## Claims

1. Device for transporting segments of wood (B), comprising a hoop (1) made of a biodegradable and combustible material, **characterized in that** the said hoop comprises two hooping rings (11, 12) connected by spacers (13, 13') immobilized on the said rings by interaction of shapes (e₁₁, e₁₃, l₁₁₃, l₁₃₁, l₁₃₂).

2. Device according to Claim 1, **characterized in that** at least one of the elements that are one of the rings (11, 12) and one of the spacers (13, 13') is provided with a notch (113, 131, 132) for partial reception of the other element.

3. Device according to one of Claims 1 or 2, **characterized in that** it also comprises at least one wedge (14) capable of being inserted (F₂) between a spacer (13) and adjacent segments of wood (B) placed in the hoop (1), the said wedge pressing respectively against the said spacer and against the said adjacent segments of wood.

4. Device according to Claim 3, **characterized in that** the said wedge (14) is provided with reliefs (144, 145) for immobilization relative to the said spacer (13), the said reliefs engaging selectively with a corresponding portion (138) of the said spacer, depending on the degree of insertion (F₂) of the said wedge between the said spacer and the said segments of wood (B).

5. Device according to one of Claims 2 or 3, **characterized in that** it also comprises a key (3) for retaining the said spacer (13) during the insertion (F₂) of the said wedge (14) between the said spacer and the adjacent segments of wood (B) placed in the hoop (1), a portion (32) of the said key being capable of capping the said spacer while arranging a zone (35, V₃₅) for the wedge to pass during its insertion (F₂), the said portion being fixedly attached to a retaining handle (31).

6. Device according to one of the preceding claims, **characterized in that** the said hoop (1) comprises two hooping rings (11, 12) each provided with several preferential breakage zones (115).

7. Device according to one of Claims 1 to 6, **characterized in that** the said hooping rings (11, 12), the said spacers (13, 13') and/or the said wedges (14) are moulded from a mixture of wood chippings or sawdust and a binder.

8. Device according to one of Claims 1 to 7, **characterized in that** the said hooping rings (11, 12) are provided, on their respective inner edges (114) with reliefs (116) for jamming the adjacent segments of wood (B).

9. Device according to one of the preceding claims, **characterized in that** the said hoop (1) defines a rolling surface (111, 112) making it possible to make the said hoop roll on the ground and **in that** the said rolling surface is provided with at least one substantially flat zone (112, 122) capable of allowing the said device to rest stably on a flat surface.

10. Device according to one of Claims 1 to 9, **characterized in that** at least one (13) of the said spacers (13, 13') forms a handle (139) for carrying the said hoop (1) whether or not it is loaded with segments of wood (B).

11. Method for packaging segments of wood in which the said segments (B) are placed in a hoop (1) of a device according to one of the preceding claims, in which, after the said hoop has been filled with the said segments of wood, it comprises a step consisting of inserting (F₂), between at least one spacer (13) connecting two hooping rings (11, 12) belonging to the said hoop and adjacent segments of wood (B), a wedge (14) for locking the said segments in position in the said hoop.

12. Method according to Claim 11, **characterized in that** it comprises a step consisting in stacking the wood (B) in the said hoop, making it roll (F₁) or shaking it, before installing (F₂) the or each wedge (14).

## Patentansprüche

1. Vorrichtung zum Transport von Holzsegmenten (B), enthaltend:
eine ringförmige Befestigung (1), die aus einem biologisch-abbaubarem und brennbarem Material erstellt ist,
**gekennzeichnet dadurch, dass** die Befestigung zwei Umschnürungsringe (11, 12) enthält, die durch Abstandshalter (13, 13') verbunden sind, die auf den Ringen durch Zusammenwirkung der Formen (e₁₁, e₁₃, l₁₁₃, l₁₃₁, l₁₃₂) festgelegt sind.

2. Vorrichtung gemäß dem Anspruch 1, **dadurch gekennzeichnet, dass** wenigstens eines der Elemente aus einem der Ringe (11, 12) und einem der Abstandshalter (13, 13') mit einer Einkerbung (113, 131, 132) zur teilweisen Aufnahme des anderen Elements versehen ist.

3. Vorrichtung nach einem der Ansprüche 1 oder 2, **dadurch gekennzeichnet, dass** sie weiter wenigstens einen Keil (14) enthält, der angepasst ist, zwischen einen Abstandshalter (13) und angrenzende Holzsegmente (B), die in der Befestigung (1) angeordnet sind, eingeführt zu werden (F₂), wobei der Keil jeweils in Anlage gegen den Abstandshalter und gegen die Holzsegmente gelangt.

4. Vorrichtung gemäß dem Anspruch 3, **dadurch gekennzeichnet, dass** der Keil (14) im Gegensatz zu dem Abstandshalter (13) mit Flächenformen (144, 145) zur Blockierung versehen ist, wobei die Flächenformen gezielt mit einem entsprechenden Teil (138) des Abstandshalters, in Abhängigkeit von dem Maß der Einführung (F₂) des Keils zwischen den Abstandshalter und die Holzsegmente (B), in Eingriff gelangen.

5. Vorrichtung gemäß einem der Ansprüche 2 oder 3, **dadurch gekennzeichnet, dass** sie weiter einen Schlüssel (3) zum Halten des Abstandshalters (13) während der Einführung (F₂) des Keils (14) zwischen den Abstandshalter und benachbarte Holzsegmente (B), die in der Befestigung (1) angebracht sind, enthält, wobei ein Teil (32) des Schlüssels dazu angepasst ist, den Abstandshalter aufzusetzen und dabei einen Durchgangsbereich (35, v₃₅) für den Keil für seine Einführung (F₂) offen zulassen, wobei der Teil von einem Haltegriff (31) zusammengehalten wird.

6. Vorrichtung gemäß einem der vorangehenden Ansprüche, **dadurch gekennzeichnet, dass** die Befestigung (1) zwei Umschnürungsringe (11, 12) enthält, wobei jeder mit mehreren Sollbruchbereichen (115) versehen ist.

7. Vorrichtung gemäß einem der Ansprüche 1 bis 6, **dadurch gekennzeichnet, dass** die Umschnürungsringe (11, 12), die Abstandshalter (13, 13') und/oder die Keile (14) aus einer Holzspanmischung oder einer Holzsägemehlmischung und einem Bindemittel gestaltet sind.

8. Vorrichtung gemäß einem der Ansprüche 1 bis 7, **dadurch gekennzeichnet, dass** die Umschnürungsringe (11, 12) auf ihren jeweiligen inneren Rändern (114) mit Flächemformen (116) zur Verkeilung der angrenzenden Holzsegmente (B) versehen sind.

9. Vorrichtung gemäß einem der vorhergehenden Ansprüche, **dadurch gekennzeichnet, dass** die Befestigung (1) eine Lauffläche (111, 112) festlegt, die es erlaubt, die Befestigung auf dem Boden zu rollen, und **dadurch**, dass die Lauffläche mit wenigstens einem im Wesentlichen ebenen Bereich (112, 122) versehen ist, der geeignet ist, eine stabile Auflage der Vorrichtung auf einer ebenen Oberfläche zu ermöglichen.

10. Vorrichtung gemäß einem der Ansprüche 1 bis 9, **dadurch gekennzeichnet, dass** wenigstens einer (13) der Abstandshalter (13, 13') einen Griff (139) zum Tragen der Befestigung (1), die mit Holzsegmenten (B) beladen oder nicht beladen ist, formt.

11. Verfahren zum Verpacken von Holzsegmenten, bei dem die Segmente (B) in einer Befestigung (1) einer Vorrichtung gemäß einem der vorhergehenden Ansprüche angeordnet werden, das nach der Befüllung der Befestigung mit den Holzsegmenten einen Schritt enthält, der darin besteht, einen Keil (14) zur Verriegelung der Segmente in Position in der Befestigung zwischen wenigstens einen Abstandshalter (13), der zwei Umschnürungsringe (11, 12) verbindet, die zu der Befestigung gehören, und angrenzenden Holzsegmenten (B) einzuführen (F₂).

12. Verfahren gemäß dem Anspruch 11, **dadurch gekennzeichnet, dass** es einen Schritt enthält, der darin besteht, in der Befestigung das Holz (B) zusammenzudrücken, indem sie gerollt (F₁) oder indem sie geschüttelt wird, bevor der oder jeder Keil (14) eingesetzt wird (F₂).
